# EUROPEAN PATENT SPECIFICATION

(11) **EP 2 188 218 B1**
(45) Date of publication and mention of the grant of the patent: **14.12.2011**
(21) Application number: 08774326.6
(22) Date of filing: 26.06.2008
(51) Int. Cl.: C02F 1/52, C02F 1/50, C02F 1/56, C02F 1/28, C02F 1/42, C02F 101/10

(54) **WATER PURIFICATION COMPOSITION AND PROCESS**
WASSERREINIGUNGSZUSAMMENSETZUNG UND VERFAHREN
COMPOSITION ET PROCÉDÉ DE PURIFICATION D'EAU

(30) Priority: 16.07.2007 IN MU13552007; 31.08.2007 EP 07115397
(43) Date of publication of application: 26.05.2010
(73) Proprietor: Unilever N.V., 3012 AL Rotterdam (NL); Unilever PLC, London Greater London EC4P 4BQ (GB)
(72) Inventor: GUPTA, Santosh, Kumar, Bangalore 560066 (IN); MAHAPATRA, Samiran, Bangalore 560066 (IN); PRAMANIK, Amitava, Bangalore 560066 (IN); SARKAR, Ayan, Bangalore 560066 (IN)
(74) Representative: Rosen Jacobson, Frans Lucas M.
(86) International application number: PCT/EP2008/058142
(87) International publication number: WO 2009/010376

(56) References cited:
- EP-A1- 0 566 260
- EP-A1- 0 566 260
- WO-A-2005/012194
- US-A- 5 174 903
- US-B1- 6 525 117

## Description

### FIELD OF THE INVENTION

The invention relates to a composition and a process for purification of contaminated water. The invention is especially useful for removal of harmful contaminants like Arsenic in addition to removal of other harmful microbial contaminants and suspended particulate impurities to make the water suitable for human consumption.

### BACKGROUND AND PRIOR ART

Water is one of the most important commodities for survival of the human species. Purified water for potable purposes is becoming more scarce especially in developing and under-developed countries. In such countries, especially in the rural areas, municipal drinking water treatment plants which pipe water to the households are rare, if any. People collect water directly from ground and/or underground water sources like wells, tube-wells, ponds and rivers. Often these water sources are contaminated by sewage, industrial and agricultural wastes.

The various types of water purification systems available are those that utilize UV radiation, halogenated resins, reverse osmosis etc are not very convenient to use in these rural areas since they either require running water and / or electricity or are too expensive for the consumers. Hence many people in the rural areas resort to boiling of water to kill the pathogenic microorganisms in their drinking water. Boiling of water does not remove harmful contaminants from water like arsenic and heavy metals. Boiling is also expensive and require large amount of fuel which is increasingly becoming scarce. Ground and underground water in many areas in the world are naturally contaminated with high amounts of inorganic impurities like Arsenic. Arsenic is an extremely harmful contaminant. People continue to ingest water with these high levels of microorganisms and impurties like Arsenic which are responsible for the high mortality and morbidity in these areas.

Arsenic is one of the most toxic contaminants found in the environment. Arsenic is found in soils, rocks, natural waters and organisms. Arsenic is the twentieth most abundant element in earth's crust. The most common oxidation states of arsenic are 3+ and 5+. Among all the arsenic compounds present in the environment, of particular interest is arsenite (which is Arsenic in the As (III) form, which is 25-50 times more toxic than arsenate (which is Arsenic in As (V) form) and 70 times more toxic than the methylated species, dimethylarsinate (DMA) and monomethylarsonate(MMA). These facts indicate why it is of priority interest to develop technologies for the removal of As (III), from drinking water.

Inorganic arsenic is identified as a group-I carcinogen for humans. More than 100 million people are affected worldwide due to arsenic contaminated drinking water. Drinking water in many of these areas has arsenic content as high as 300 parts per billion (ppb). The WHO and USEPA recommended MCL (maximum contaminant level) of arsenic in drinking water is 10 ppb. Available arsenic removal technologies are membrane separation, ion exchange and adsorption. These technologies either require expensive equipments which are not affordable in many parts of the world or are not successful in removing Arsenic, especially in the As (III) to the WHO recommended specification. Further, boiling of water, which many people resort to for purification of water, does not remove Arsenic. Thus, one of the major challenges in this field is poor removal of arsenic (III). Additionally, while arsenic in the purified water has to meet these stringent requirements, the technology should also ensure removal of harmful micro organisms like cysts, bacteria and virus to a level which is safe for people to consume. According to EPA, water from any unknown origin can be rendered microbiologically safe to drink if removal of log 6 of bacteria, log 4 of virus and log 3 of cysts is attained. Thus a generally accepted removal criteria for bacteria, virus and cysts are log 6, log 4 and log 3 respectively.

One of the commonly used methods for removal of arsenic from water is by treating it with an iron compound. JP2002079015A claims a filter for arsenic removal that is composed of fired diatomaceous earth and 5-30% by weight of ferric ion bonded to the fired diatomaceous earth. The method of preparation of this material comprises steps of impregnating diatomaceous earth with ferric chloride, adding sodium hydroxide to the resulting mixture to a pH of at least 9.0, and then gradually and completely oxidizing the ferric chloride to ferric hydroxide.

US20030089665A1 by Engelhard Corp. claims an arsenic removal media comprising a mixture of: (a) activated bauxite; (b) aluminum trihydrate; and (c) a ferric compound selected from the group consisting of ferric hydroxide, ferric oxyhydroxide, ferric hydroxyoxide and mixtures thereof. Using this composition about 90% arsenic removal is demonstrated.

US20030132155A1 claims a method for removing arsenic from an aqueous medium comprising contacting the aqueous medium with an amount of chemically treated zeolite preferably ferric-loaded zeolite for a period of time sufficient to remove arsenic in the aqueous medium. Using this method a maximum of 95% arsenic removal is demonstrated.

US20050250644 A1 (Univ. California) claims a method for treating bottom ash for arsenic removal in water, comprising: a) providing a quantity of bottom ash; and b) means for forming a coated Fe(OH)₃ bottom ash in suspension from the quantity of bottom ash. Using this method a maximum of 98% arsenic removal is demonstrated.

A paper published in Ind. Eng. Chem. Res. 2005, vol 44, 6804-6815 by Li Yang et al., titled Removal of trace levels of arsenic and selenium from aqueous solutions by calcined and uncalcined layered double hydroxides (abbreviated as LDH) discusses removal of Arsenic using Magnesium-Aluminium LDH which is commonly known as hydrotalcite. It was found, however, that the arsenic removal obtained is not good enough for providing safe drinking water.

WO2005/012194 (University of Wyoming Research Corp) discloses filter media comprising LDH and lignin, for the removal of inorganic and organic contaminants from aqueous solutions. Lignin, due to its negatively charged surface, is said to offer binding sites for positively charged metal ions, in particular the positively charged ions of toxic metals. It is further indicated that compositions of a Lignin compound and a LDH can possess affinity with both positively charged and negatively charged contaminants.

Certain other compositions like those described in WO02/00557 (Procter and Gamble) also claim arsenic removal. The present inventors have found that in the above cited prior art, either the methods taught do not meet the stringent WHO standards for safe drinking water in terms of Arsenic content, or are not liked by the consumer due to poor aesthetics or have some difficulty or other in scaling up the technology to a commercial scale. It is desirable to provide for a composition and a method that provides enhanced arsenic removal compared to those taught in the prior art or ameliorate at least one of the disadvantages therein.

The present inventors have worked assiduously on solving this problem. They have found that a flocculation/ disinfection composition which comprises certain double layered hydroxides which contain at least one divalent cation selected from a particular group and at least one trivalent cation selected from a particular group provides for enhanced arsenic removal.

It is thus one object of the invention to provide for a method to purify water contaminated with Arsenic more efficiently than reported in the aforementioned prior art.

It is another object of the present invention to provide for a water purification composition that enables enhanced arsenic removal compared to compositions in the aforementioned prior art or solves at least one of the problems present therein.

It is yet another object of the present invention to provide for a water purification composition for removal of arsenic that meets the WHO standards of less than 10 ppb arsenic in the purified water.

### SUMMARY OF THE INVENTION

According to the first aspect of the present invention there is provided a composition for purification of contaminated water comprising
(i) a first component which is a layered double hydroxide compound as in claim 1 and
(ii) a second component which is selected from, a flocculating agent or a coagulating agent.

According to a preferred aspect of the present invention the composition comprises a biocide. The most suitable biocide is a halogen compound.

According to another preferred aspect of the present invention the composition comprises a coagulating agent which is a water soluble inorganic metal salt having trivalent cation and a flocculating agent which is a high molecular weight water soluble polymer or mixtures thereof.

According to another aspect of the present invention there is provided a process for purifying contaminated water comprising the steps of contacting contaminated water with the composition as per the first aspect of the invention and separating the insoluble matter from the water.

### DETAILED DESCRIPTION OF THE INVENTION

All parts herein are by weight unless otherwise specified. The invention provides for a composition comprising a layered double hydroxide (LDH) compound having certain specific combination of cations and anions for purification of contaminated water. The composition is especially useful for removal of harmful contaminants e.g. arsenic, selenium which are usually present as anions in compounds. The layered double hydroxide has the general formula:
(M₁²⁺.M₂²⁺)ₓ(M₃³⁺.M₄³⁺)_{y}(OH)_{2x+2y}(A²⁻)_{y/z}. nH₂O or calcined forms thereof
Where, M₁²⁺ and M₂²⁺ are divalent cations as specified in claim 1 and M₃³⁺ and M₄³⁺ are trivalent cations selected from aluminium or iron, A is an anion selected from OH⁻, CO₃²⁻, Cl⁻, NO₃⁻, SO₄⁻, PO₄³⁻, Fe(CN)O₆⁴⁻ and

x has a value from 0.1 to 10.0, y has a value from 0.1 to 5.0, n has a value between 0 to 10.0, z has a value from 1.0 to 4.0 and, the mole ratio of M₁²⁺; M₂²⁺ is any value from 0 to 1 and the mole ratio of M₃³⁺;M₄³⁺ is any value from 0 to 1.

The divalent cations in the LDH compounds are selected from magnesium, zinc or copper and the trivalent cations are selected from aluminium or iron. The LDH compounds have at least one divalent cation and at least one trivalent cation. The other preferred combinations include one or two divalent cations and one or two trivalent cations. The preferred LDH compounds have the following combination of cations:
Cu-Al, Zn-Al, Zn-Fe, Cu-Fe, Zn-Al-Fe, Cu-Al-Fe, Cu-Mg-Fe, Zn-Mg-Fe, Zn-Cu-Fe, Zn-Cu-Al, Zn-Mg-Al, Cu-Mg-Al, Zn-Cu-Al-Fe, Mg-Cu-Al-Fe, or Mg-Zn-Al-Fe.

The more preferred anion A in the LDH of the invention are Cl^{-,} NO₃⁻ or CO₃²⁻. The LDH most preferably comprises at least 1 divalent cation selected from Zn or Cu and at least one trivalent cation being Fe.

The preferred range of x in the LDH of the invention is from 1 to 9 with the most preferred value being 6. The preferred range of y in the LDH of the invention is from 0.5 to 4 with the most preferred value being 2. The preferred range of n in the LDH of the invention is from 2 to 10 with the most preferred value being 4.

Thus, the some of the most preferred LDH as per the invention have the formula:
Zn₆Fe₂(OH)₁₆(CO₃). 4H₂O,
Cu₆Fe₂(OH)₁₆(CO₃). 4H₂O,
Zn₆AlFe(OH)₁₆(CO₃). 4H₂O, and/or
Cu₆AlFe(OH)₁₆(CO₃). 4H₂O.

The LDHs can also be in their calcined forms. The layered double hydroxide compound is preferably present in an amount in the range of 1 to 80%, more preferably in the range of 2 to 60% by weight of the composition.

The LDH of the invention are preferably prepared using the following method:

Salts of the bivalent and trivalent metal ions in desired molar ratio are dissolved in water. Thus, if the value of x of 6 and a value of y of 2 is desired, the mole ratio of the bivalent to the trivalent metal salt is taken as 3:1. Suitable salts include the nitrates. sulphates, chlorides or acetates. The salt solution is heated to a temperature in the range of 85 to 105°C, preferably from 90 to 95 °C. In a separate vessel, an alkali solution is prepared. Suitable alkalis include alkali metal carbonate, bicarbonate or hydroxide or compounds like ammonia or urea. The alkali solution is also heated to a high temperature, preferably in the range of 80 to 105°C, more preferably in the range of 90 to 95 °C. At this high temperature, the salt solution and the alkali solution are added to a third vessel simultaneously with vigorous stirring. During the addition the temperature of the solution is maintained at a high temperature preferably in the range of 90 to 95°C. The LDH compound are formed during this reaction and precipitate out from the solution. After the precipitation is complete, the temperature of the solution is usually maintained at this temperature for some time preferably at least 15 minutes, more preferably at least one hour. The precipitate is then washed to be substantially free of dissolved salts, filtered preferably under vacuum, and dried. The calcined forms of the LDH compounds to be included in the composition of the invention are prepared by heating the LDH compounds to a temperature higher then 400 °C, more preferably in the range of 400 to 700 °C,

The invention provides for a composition comprising the LDH compounds described above. The composition of the invention provides for enhanced removal of impurities e.g arsenic compounds from contaminated water. According to a preferred aspect of the present invention any biocide may be used. Preferred biocide is a halogen containing compound. More preferred halogen compounds are those of chlorine or iodine, more preferably those of chlorine. Suitable chlorine compounds are inorganic compounds like sodium hypochlorite, calcium hypochlorites, chlorine dioxide, or chloramines, or organic chlorine compounds like sodium dichloro-isocyanurates, or trichloroisocyanuric acid. The biocide is preferably present in an amount in the range of from 1 to 30%, more preferably from about 2 to 25%, further more preferably 3 to 15% by weight of the composition. Most preferred biocide is calcium hypochlorite.

The second component of the composition of the invention may comprise a coagulating agent which is a water soluble inorganic metal salt having trivalent cation or a flocculating agent which is a high molecular weight water soluble polymer or a mixture thereof.

The coagulating agent is a compound which is a water-soluble inorganic metal salt having trivalent cation. Suitable trivalent cations are Al³⁺ and Fe³⁺. The coagulant is generally free from carbon atoms. Examples of coagulating agents are ferric sulfate, aluminium sulfate and polyaluminium chloride. The coagulating agent is preferably present in an amount in the range of from 5 to 60%, more preferably from 15 to 50% by weight of the composition.

The flocculating agent is a compound which is a high molecular weight water soluble polymer. Examples of suitable flocculating agents are polysaccharides (dextane celluloses), proteins, modified celluloses (hydroxyethyl/hydroxypropyl or carboxymethyl), and polyacrylamides preferably high molecular weight polyacrylamide. It is especially preferred that the polyacrylamide is either anionic or non-ionically modified, more preferably anionically modified. Suitable molecular weights of these polyacrylamides are in the range of 10⁵ to 10⁷. A preferred amount of the flocculating agent is from 0.5 to 15%, more preferably from 1 to 10% and most preferably from 2 to 8% by weight of the composition.

The purification action of the composition of the invention can be attained at the pH of the raw water available. As a preferred aspect, the pH of the composition may be adjusted to the desired range of 6 to 8 by including a buffering agent in the composition. Suitable buffering agents are calcium oxide, sodium carbonate or sodium bicarbonate. The buffering agent when present is included in an amount in the range of 0.5 to 10% by weight of the composition.

The water purification composition may optionally comprise an additional adsorbent. The additional adsorbent is preferably a material which is capable of adsorbing high levels of organic or inorganic compounds. Suitable adsorbent is clay. Examples of clay include Montmorillonite clay (dioctahedral smectite clay), Laponite, Hectorite, Nontronite, Saponite, Volkonsite, Sauconite, Beidellite, Allevarlite, Illite, Halloysite, Attapulgite, Mordenite, Kaolines, and Bentonite. A highly preferred clay as per this invention is Bentonite clay. When included, adsorbents are present in an amount in the range of 5 to 75%, more preferably from about 10 to 60% by weight of the composition. The water purification composition preferably has a moisture content of not more than 5%, more preferably not more than 3%, and most preferably not more than 2% by weight of the composition.

According to a preferred aspect of the invention the composition comprises two portions which are spatially separated wherein the first portion comprises the biocide and the second portion comprises the flocculating/coagulating agent. The LDH compound in this aspect of the invention may be present in either portion. In this aspect of the invention, it is preferred that the first portion comprises less than 5 % moisture, more preferably less than 3% moisture, most preferably less than 2% moisture by weight of the first portion. When an additional adsorbent is present, it may be included in both the first portion and the second portion or may be present in any one of the portions.

A further preferred aspect of the invention provides for the second portion to comprise a biocide quencher which is capable of reacting with the biocide to render it safe and aesthetically acceptable for human consumption. Suitable quenchers are sodium thiosulphate and ascorbic acid. The quencher is preferably present in an amount in the range of 1 to 20% by weight of the second portion, more preferably from about 2 to 12% by weight of the second portion.

The solid form is the most suitable form of the composition of the invention. Suitable solid forms include the powder, granule and tablet forms, most preferred form being the powder form. When delivered as two portions, the most preferred form is the powder form in both the first portion and the second portion.

The composition of the invention is preferably delivered in amounts in the range of 0.5 to 10 grams more preferably in the range of 1 to 5 grams. These are usually added to 5 to 20 litres of water. When delivered in two portions, suitable weight of the first portion is 0.01 to 5 grams, more preferably 0.1 to 1.5 gram and suitable weights of the second portion is 0.5 to 10 grams.

The water purification composition of the invention may be delivered to the consumer in any known suitable packaging form. When formed as tablets, the packaging may be metallised laminate or blister packing. When formed as powders, suitable packaging is metallised laminate. However the metallised laminate packaging has to be such that the halogen compounds that usually react with metals are kept separated from the metal part of the laminate by use of suitable polymeric layers on the metal layer.

According to another aspect of the invention there is provided a process for purifying water comprising the steps of (i) mixing the composition of the invention with the water to be purified and (ii) separating the insoluble matter from the mixture.

When the composition of the invention comprises a biocide and a flocculating/coagulating agent, the process comprises the steps of (i) contacting the contaminated water with a biocide followed by; (ii) contacting the contaminated water with the coagulating /flocculating agent to form flocs; and (iii) separating the flocs from the water. The LDH compound may be added during either or both steps.

When the product is configured in two portions, a suitable process comprises the sequential steps of mixing the composition of the first portion with the water to be purified; followed by the step of mixing the composition of the second portion and then separating the insoluble matter from the mixture. The first portion is usually mixed for a period of time from 0.5 to 5 minutes and the water is then allowed to stand for a time period of 2 to 10 minutes, after which the second portion is added. The mixture is then mixed for a period of time from 0.5 to 5 minutes and again allowed to stand for 2 to 10 minutes so that insoluble matter settle down. The insoluble matter is then separated from the mixture usually by filtration or decantation. A simple cloth may be used for filtration.

The process of the invention is especially suited for purifying water which contains arsenic. In contaminated areas, average arsenic concentration in raw water is around 300 ppb by weight, and may be much higher in highly contaminated areas. By using the process of the invention, it is possible to get purified water having an arsenic content as low as less than 10 ppb in the purified water.

Yet another aspect of the invention provides for the use of the composition of the present invention for purifying contaminated water.

The invention will now be illustrated by the following non-limiting examples.

### EXAMPLES

Preparation of arsenic stock solution: R. O water (reverse osmosis purified water) was taken and arsenic compound i.e sodium arsenate (Na₂HAsO₄.7H₂O) was added to the test water.

### Determination of arsenic content

Inductively coupled plasma-optical emission spectroscopy (ICP-OES) (Varian-Vista-PRO) was used to measure total arsenic concentration (>50 ppb) in the solution. The total arsenic concentrations lower than 50 ppb were analyzed by inductively coupled plasma-mass spectrometry (ICP-MS) (Eldrin 9000). In both the analytical methods the samples were injected in the machines without any pre-concentration or pre-dilution and the total arsenic concentrations were measured.

### Examples 1, 3-5, 7, 8 and Comparative Examples A to D

LDH compounds of Examples 1, 3-5, 7, 8 were prepared as follows:

Nitrate salts of the bivalent and nitrate salts of the trivalent metal ions in molar ratio as shown in Table -1 were mixed and dissolved in water and the solution heated to a temperature of 90 to 95°C. In a separate vessel, a sodium carbonate solution was prepared and heated to a temperature in the range of 90 to 95 °C. The salt solution and the carbonate solution were added to a third vessel simultaneously with vigorous stirring. During the addition the temperature of the solution is maintained at a temperature in the range of 90 to 95°C. The LDH compound was formed during this reaction and precipitated out from the solution. After the precipitation was complete, the slurry was kept stirred at the same temperature for about one hour. The precipitate is then washed to be substantially free of dissolved salts, filtered under vacuum, and dried to a moisture content of less than 10%.

The process of purification was as follows: Purification process: 100 ml of arsenic spiked water containing 1000 ppb of arsenic was taken in a beaker and the LDH compound as shown in Table-1, at 0.1 gram was added to the test water and stirred for two hours. The resulting mixture was then filtered under vacuum through a 0.2 micron filter paper. The arsenic content of the filtered water was measured and the result is summarized in Table - 1. The process was carried out using known adsorbents for arsenic (Comparative Examples A to D) including AD33 (Comparative Example A) which is one of the best known commercially available arsenic adsorbent.

**Table - 1**

| Examples | Compound used | Final arsenic concentration (ppb) | Removal (%) |
|---|---|---|---|
| Ex-1 | Cu₆Al₂ LDH | <10 | >99 |
| Ex-3 | Zn₆Al₂ LDH | <10 | >99 |
| Ex-4 | Zn₆Fe₂ LDH | <10 | >99 |
| Ex-5 | Cu₆Fe₂ LDH | <10 | >99 |
| Ex-7 | Zn₆AlFe LDH | <10 | >99 |
| Ex-8 | Cu₆AlFe LDH | <10 | >99 |
| Comp Ex - A | Iron Oxo-hydroxide (AD33) | 120 | 88 |
| Comp Ex - B | Titanium dioxide, Rutile | 720 | 28 |
| Comp Ex - C | Activated Carbon | 800 | 20 |
| Comp Ex - D | Bentonite Clay | 900 | 10 |

In the above and all experiments in this specification:

AD33 was procured from Adege Technologies Inc, 3560 Financial Centre way, Suite - 5, Buford, GA - 30519, USA. Bentonite clay was procured from Neelkanth Minechem, India and had an average particle size of about 125 microns. Titanium dioxide was procured from Maruti Chemicals, Bangalore, India.

The data in Table - 1 indicates that it is possible to get enhanced removal of arsenic from contaminated water using a method which includes the step of treating the contaminated water with the LDH compounds of the invention. The removal efficiency is far superior to that obtained used conventional materials.

### Examples 9 to 12 and Comparative Examples E to I

Experiments were carried out with more preferred LDH compounds of the invention with a more highly contaminated water i.e water with 10,000 ppb of arsenic. The procedure used was similar to that for Examples 1 to 8. The data is summarized in Table - 2:

**Table-2**

| Examples | Compound used | Final arsenic concentration (ppb) | Removal (%) |
|---|---|---|---|
| Ex-9 | Zn₆Fe₂ LDH | 120 | 98.8 |
| Ex-10 | Cu₆Fe₂ LDH | 80 | 99.2 |
| Ex-11 | Zn₆AlFe LDH | 150 | 98.5 |
| Ex-12 | Cu₆AlFe LDH | 60 | 99.4 |
| Comp Ex - E | Iron Oxo-hydroxide (AD33) | 4000 | 60 |
| Comp Ex - F | Titanium dioxide, Rutile | 6000 | 40 |
| Comp Ex - G | Activated Carbon | 8000 | 20 |
| Comp Ex - H | Bentonite Clay | 9000 | 10 |
| Comp Ex - I | Mg₆Al₂ LDH | 3370 | 66.3 |

The data in Table-2 indicates that it is possible to purify water highly contaminated with Arsenic using a method which uses the preferred LDH compounds of the invention. The adsorption capacity is significantly superior to the materials used in the prior art.

### Example 13 and Comparative Examples J to L: Performance of LDH compounds in combination with a flocculation composition (Example 13) and compositions outside the invention (Comparative Examples J to L)

Process of purification was as follows: 10 Litres of test water having 300 ppb of arsenic was taken in a bucket. The As(III) compound used was NaAsO₂ and the As(V) compound used was Na₂HAsO₄.H₂O Compositions as shown in Table-3 was added and stirred for one minute. The mixture was allowed to stand for five minutes. The water was then filtered through a cloth. The arsenic content of the filtered water was measured and the result is summarized in Table - 3.

**Table-3**

| Examples | Comparative Example -J | Comparative Example - K | Comparative Example - L | Example - 13 |
|---|---|---|---|---|
| Polyaluminium Chloride, g | 0.6 | - | 0.6 | 0.6 |
| Polyacrylamide, g | 0.08 | - | 0.08 | 0.08 |
| Adsorbent | Fe₂O₃ | Zn₆Fe₂ LDH | - | Zn₆Fe₂ LDH |
| Adsorbent, g | 0.5 | 0.5 | - | 0.5 |
| Form of As in test water | As(V) | As(V) | As(V) | As(V) |
| Arsenic in purified water, ppb | 120 | 50 | 150 | 8 |

The data in Table-3 indicates that it is possible to purify arsenic contaminated water using a composition containing LDH compound of the invention in combination with a flocculating system. This combination provides synergistic benefits as compared to the individual components alone. Further, the purification efficiency of the composition of the invention is superior to similar compositions of the prior art.

### Examples 14 and Comparative Examples M to O: Performance of LDH compound in combination with a biocide (Examples 14) as compared to compositions outside the invention (Comparative Examples M to O).

Experiments were carried out with the compositions given in Table -4 and these were used to purify 10 litres of water containing 300 ppb of arsenic (in As (III) form). The procedure used was similar to that for Example 13. The data is summarized in Table-4:

**Table- 4**

| Examples | Comp. Example - M | Comp. Example - N | Comp. Example - O | Examples - 14 |
|---|---|---|---|---|
| Ca Hypo, g | 0.15 | - | 0.15 | 0.15 |
| Adsorbent | Fe₂O₃ | Cu₆AlFe LDH | - | Cu₆AlFe LDH |
| Adsorbent, g | 0.5 | 0.5 | - | 0.5 |
| Arsenic in purified water, ppb | 100 | 100 | 300 | 50 |

The data in Table - 4 indicates that preferred compositions of the invention provide for superior Arsenic removal as compared to similar prior art compositions. Further data in Table-4 indicates that it is possible to get synergistic benefits in arsenic removal when using a composition containing an LDH compound in combination with a biocide.

### Examples 15 to 17 and Comparative Examples L to N and P to T: Performance of LDH compounds in combination with a flocculation-disinfection composition (Examples 15 to 17) as compared to performance of similar prior art compositions (Comparative Examples L to N and P to T)

Experiments were carried out with the compositions given in Table -5 and these were used to purify water containing 300 ppb of arsenic. The procedure used was as following: The biocide was added to the water and stirred for one minute. The mixture was then allowed to stand for five minutes. Then a mixture of the adsorbent, flocculant and coagulant was added to the water and stirred for one minute. The flocculated mass was then allowed to stand for 5 minutes. The flocs were then separated by filtration through a cloth.

The data of the arsenic content in the purified water is summarized in Table - 5:

**Table -5**

| Example | Biocide, grams | PAC, grams | PAM, grams | Adsorbent | Adsorbent grams | Arsenic Form | Arsenic content, ppb |
|---|---|---|---|---|---|---|---|
| L | - | 0.60 | 0.08 | - | - | As(III) | 150 |
| M | 0.15 | - | - | - | - | As(III) | 300 |
| N | - | - | - | Cu₆AlFe | 0.5 | As(III) | 100 |
| P | 0.15 | 0.60 | 0.08 | - | - | As(III) | 50 |
| Q | 0.15 | 0.60 | 0.08 | Bentonite Clay | 0.5 | As(III) | 50 |
| R | 0.15 | 0.60 | 0.08 | Activated Carbon | 0.5 | As(III) | 50 |
| S | 0.15 | 0.60 | 0.08 | Talc | 0.5 | As(III) | 50 |
| T | 0.15 | 0.60 | 0.08 | Zeolite | 0.5 | As(III) | 50 |
| 15 | 0.15 | 0.60 | 0.08 | Cu₆AlFe LDH | 0.5 | As(III) | 5 |
| 16 | 0.15 | 0.60 | 0.08 | Cu₆AlFe LDH | 0.5 | As(III) + As(V) 1:1 wt ratio | 5 |
| 17 | 0.15 | 0.60 | 0.08 | Calcined Mg₆Fe₂ LDH | 0.5 | As(III) | 5 |

| | | | | | | | |
|---|---|---|---|---|---|---|---|
| Biocide used was Calcium hypochlorite; PAC is Poly aluminium chloride (coagulant); PAM is Poly acrylamide (flocculant). | | | | | | | |

The data in Table - 5 indicates that preferred compositions of the invention provide for vastly superior Arsenic removal as compared to similar prior art compositions.

## Claims

1. A composition for purification of contaminated water comprising
(i) a first component which is a layered double hydroxide compound of the formula:
(M₁²⁺.M₂²⁺)ₓ(M₃³⁺.M₄³⁺)_{y}(OH)_{2x+2y}(A^{z-})_{y/z}. nH₂O or calcined forms thereof
Where, M₁²⁺ and M₂²⁺ are divalent cations selected from magnesium, zinc or copper, wherein at least one of the divalent cations are Zn or Cu, and M₃³⁺ and M₄³⁺ are trivalent cations selected from aluminium or iron, A is an anion selected from OH⁻, CO₃²⁻, Cl⁻, NO₃⁻, SO₄⁻, PO₄³⁻, Fe(CN)₆⁴⁻ and x has a value from 0.1 to 10.0, y has a value from 0.1 to 5.0, n has a value between 0 to 10.0, z has a value from 1.0 to 4.0, and
the mole ratio of M₁²⁺: M₂²⁺ is any value from 0 to 1 and the mole ratio of M₃³⁺:M₄³⁺ is any value from 0 to 1; and wherein the calcined forms are defined to be compounds prepared by heating said compounds to a temperature in range of 400 to 700°C, and
(ii) a second component which is selected from a flocculating agent or a coagulating agent, said coagulating agent is a water soluble inorganic salt having trivalent metal cations.

2. A composition as claimed in claim 1, wherein the composition comprises a biocide.

3. A composition as claimed in claim 2 wherein said biocide is a halogen compound.

4. A composition as claimed in claim 3 wherein the halogen compound is calcium hypochlorite.

5. A composition as claimed in any one of the preceding claims wherein the biocide is present in an amount in the range of 1 to 20 % by weight of the composition.

6. A composition as claimed in any one of the preceding claims wherein at least one of the trivalent cations is iron (Fe).

7. A composition as claimed in any one of the preceding claims wherein said anion is selected from Cl⁻, NO₃⁻ or CO₃²⁻.

8. A composition as claimed in any one of the preceding claims wherein x has a value of 6.

9. A composition as claimed in any one of the preceding claims wherein y has a value of 2.

10. A composition as claimed in any one of the preceding claims comprising said flocculating agent which is a high molecular weight water soluble polymer.

11. A composition as claimed in claim 10 wherein the coagulating agent is polyaluminium chloride, aluminium sulfate or ferric sulfate.

12. A composition as claimed in claim 10 or 11 wherein the flocculating agent is anionically modified polyacrylamide.

13. A composition as claimed in any one of the preceding claims 10 to 12 comprising two portions which are spatially separated wherein the first portion comprises the biocide and the second portion comprises the coagulating agent and flocculating agent and the LDH compound may be present in either or both portions.

14. A process for purifying contaminated water comprising the steps of (i) contacting contaminated water with a composition a claimed in any one of the preceding claims and (ii) separating the insoluble matter from the water.

15. Use of a composition as claimed in any one of the preceding claims 1 to 13 for purifying contaminated water.

## Patentansprüche

1. Zusammensetzung zur Reinigung von kontaminiertem Wasser, umfassend
(i) eine erste Komponente, die eine geschichtete Doppelhydroxid-Verbindung der Formel
(M₁²⁺.M₂²⁺)ₓ(M₃³⁺.M₄³⁺)_{y}(OH)_{2x+z}y(A^{z-})_{y/z-} nH₂O oder calcinierte Formen davon ist, worin M₁²⁺ und M₂²⁺ zweiwertige Kationen, ausgewählt aus Magnesium, Zink und Kupfer, sind und wobei wenigstens eines der zweiwertigen Kationen Zn oder Cu ist, und M₃³⁺ und M₄³⁺ dreiwertige Kationen, ausgewählt aus Aluminium und Eisen, sind, A ein Anion, ausgewählt aus OH⁻, CO₃²⁻, Cl⁻, NO₃⁻, SO₄³⁻, PO₄³⁻, Fe(CN)₆⁴⁻, ist und x einen Wert von 0,1 bis 10,0 hat, y einen Wert von 0,1 bis 5,0 hat, n einen Wert zwischen 0 und 10,0 hat, z einen Wert von 1,0 bis 4,0 hat und
das Molverhältnis von M₁²⁺ : M₂²⁺ ein beliebiger Wert von 0 bis 1 ist und das Molverhältnis von M₃³⁺ : M₄³⁺ ein beliebiger Wert von 0 bis 1 ist, und wobei die calcinierten Formen definiert sind, dass sie Verbindungen sind, die durch Erhitzen der genannten Verbindungen auf eine Temperatur im Bereich von 400 bis 700 °C hergestellt werden, und
(ii) eine zweite Komponente, die aus einem Flockungsmittel oder einem Koagulierungsmittel ausgewählt ist, wobei das Koagulierungsmittel ein wasserlösliches anorganisches Salz mit dreiwertigen Metallkationen ist.

2. Zusammensetzung, wie sie in Anspruch 1 beansprucht ist, wobei die Zusammensetzung ein Biozid umfasst.

3. Zusammensetzung, wie sie in Anspruch 2 beansprucht ist, wobei das Biozid eine Halogenverbindung ist.

4. Zusammensetzung, wie sie in Anspruch 3 beansprucht ist, wobei die Halogenverbindung Calciumhypochlorit ist.

5. Zusammensetzung, wie sie in einem der vorangehenden Ansprüche beansprucht ist, wobei das Biozid in einer Menge im Bereich von 1 bis 20 Gew.-% der Zusammensetzung vorliegt.

6. Zusammensetzung, wie sie in einem der vorangehenden Ansprüche beansprucht ist, wobei wenigstens eines der dreiwertigen Kationen Eisen (Fe) ist.

7. Zusammensetzung, wie sie in einem der vorangehenden Ansprüche beansprucht ist, wobei das Anion aus Cl⁻, NO₃⁻ und CO₃²⁻ ausgewählt ist.

8. Zusammensetzung, wie sie in einem der vorangehenden Ansprüche beansprucht ist, wobei x einen Wert von 6 hat.

9. Zusammensetzung, wie sie in einem der vorangehenden Ansprüche beansprucht ist, wobei y einen Wert von 2 hat.

10. Zusammensetzung, wie sie in einem der vorangehenden Ansprüche beansprucht ist, die das Flockungsmittel enthält, das ein wasserlösliches Polymer mit hohem Molekulargewicht ist.

11. Zusammensetzung, wie sie in Anspruch 10 beansprucht ist, wobei das Koagulierungsmittel Polyaluminiumchlorid, Aluminiumsulfat oder Eisen(III)-sulfat ist.

12. Zusammensetzung, wie sie in Anspruch 10 oder 11 beansprucht ist, wobei das Flockungsmittel anionisch modifiziertes Polyacrylamid ist.

13. Zusammensetzung, wie sie in einem der vorangehenden Ansprüche 10 bis 12 beansprucht ist, die zwei Teile umfasst, welche räumlich getrennt sind, wobei der erste Teil das Biozid umfasst und der zweite Teil das Koagulierungsmittel und Flockungsmittel umfasst, und die LDH-Verbindung in einem oder beiden Teilen vorliegen kann.

14. Verfahren zur Reinigung von kontaminiertem Wasser, umfassend die Schritte (i) In-Kontakt-Bringen von kontaminiertem Wasser mit einer Zusammensetzung, wie sie in einem der vorangehenden Ansprüche beansprucht ist, und (ii) Abtrennen des unlöslichen Materials von dem Wasser.

15. Verwendung einer Zusammensetzung, wie sie in einem der vorangehenden Ansprüche 1 bis 13 beansprucht ist, zur Reinigung von kontaminiertem Wasser.

## Revendications

1. Composition pour la purification d'une eau contaminée comprenant
(i) un premier composant qui est un composé hydroxyde double lamellaire de formule :
(M₁²⁺.M₂²⁺)ₓ(M₃³⁺.M₄³⁺)_{y}(OH)_{2x+2y}(A^{z+})_{y/z}.nH₂O ou des formes calcinées de celui-ci
où M₁²⁺ et M₂²⁺ sont des cations divalents choisis parmi le magnésium, le zinc ou le cuivre et où au moins un des cations divalents est Zn ou Cu,
et M₃³⁺ et M₄³⁺ sont des cations trivalents choisis parmi l'aluminium ou le fer, A est un anion choisi parmi OH⁻, CO₃²⁻, Cl⁻, NO₃⁻, SO₄⁻, PO₄³⁻, Fe(CN)₆⁴⁻ et x a une valeur de 0, 1 à 10,0,
y a une valeur de 0,1 à 5,0, n a une valeur de 0 à 10,0, z a une valeur de 1,0 à 4,0, et
le rapport molaire de M₁²⁺:M₂²⁺ est n'importe quelle valeur de 0 à 1 et le rapport molaire de M₃³⁺:M₄³⁺ est n'importe quelle valeur de 0 à 1 ;
et où les formes calcinées sont définies comme étant des composés préparés en chauffant lesdits composés à une température comprise dans la plage allant de 400 à 700°C ; et
(ii) un second composant qui est choisi parmi un agent de floculation ou un agent de coagulation, ledit agent de coagulation étant un sel inorganique soluble dans l'eau comprenant des cations métalliques trivalents.

2. Composition selon la revendication 1, la composition comprenant un biocide.

3. Composition selon la revendication 2, dans laquelle ledit biocide est un composé halogéné.

4. Composition selon la revendication 3, dans laquelle le composé halogéné est un hypochlorite de calcium.

5. Composition selon l'une quelconque des revendications précédentes, dans laquelle le biocide est présent en une quantité comprise dans la plage allant de 1 à 20 % en poids de la composition.

6. Composition selon l'une quelconque des revendications précédentes, dans laquelle au moins un des cations trivalents est le fer (Fe).

7. Composition selon l'une quelconque des revendications précédentes, dans laquelle ledit anion est choisi parmi Cl⁻, NO₃⁻ ou CO₃²⁻.

8. Composition selon l'une quelconque des revendications précédentes, dans laquelle x a une valeur de 6.

9. Composition selon l'une quelconque des revendications précédentes, dans laquelle y a une valeur de 2.

10. Composition selon l'une quelconque des revendications précédentes, comprenant ledit agent de floculation qui est un polymère soluble dans l'eau de poids moléculaire élevé.

11. Composition selon la revendication 10, dans laquelle l'agent de coagulation est un polychlorure d'aluminium, un sulfate d'aluminium ou un sulfate ferrique.

12. Composition selon la revendication 10 ou 11, dans laquelle l'agent de floculation est un polyacrylamide anioniquement modifié.

13. Composition selon l'une quelconque des revendications 10 à 12, comprenant deux parties qui sont spatialement séparées, la première partie comprenant le biocide et la seconde partie comprenant l'agent de coagulation et l'agent de floculation et le composé HDL peut être présent dans l'une quelconque des parties ou dans les deux parties.

14. Procédé de purification d'une eau contaminée comprenant les étapes (i) de mise en contact d'une eau contaminée avec une composition selon l'une quelconque des revendications précédentes et (ii) de séparation de la matière insoluble de l'eau.

15. Utilisation d'une composition selon l'une quelconque des revendications 1 à 13, pour la purification d'une eau contaminée.
